# EUROPEAN PATENT APPLICATION

(11) **EP 4 546 471 A1**
(43) Date of publication of application: **30.04.2025**
(21) Application number: 24205984.8
(22) Date of filing: 10.10.2024
(51) Int. Cl.: H01M 4/88, C25B 11/031, C25B 11/097, H01M 4/92

(54) **CATALYST ELECTRODE, METHOD FOR MANUFACTURING CATALYST ELECTRODE, AND MEMBRANE ELECTRODE ASSEMBLY**

(30) Priority: 13.10.2023 KR 20230136617
(71) Applicant: SK Innovation Co., Ltd., Seoul 03188 (KR)
(72) Inventor: KIM, Soo Bean, Daejeon 34124 (KR); HAN, Hyun Su, Daejeon 34124 (KR); LEE, Tae Kyoung, Daejeon 34124 (KR); SEOK, Tae Hong, Daejeon 34124 (KR); LIM, Yun Ji, Daejeon 34124 (KR)
(74) Representative: Prüfer & Partner mbB Patentanwälte · Rechtsanwälte

(57) **Abstract**

A catalyst electrode according to an embodiment of the present disclosure includes a metal layer; and a catalyst layer formed on the metal layer, wherein the catalyst layer includes iridium and palladium.

## Description

### BACKGROUND OF THE INVENTION

### 1. Field

The present disclosure relate to a catalyst electrode and a method for manufacturing the catalyst electrode.

### 2. Description of the Related Art

Hydrogen energy is clean energy and is attracting attention as one of the promising forms of alternative energy to solve energy problems in the long term. Among hydrogen production methods, the water electrolysis method, which uses electrical energy to separate water into hydrogen and oxygen and which does not emit carbon dioxide, is receiving much attention because it is eco-friendly, and is expected to greatly contribute to the achievement of carbon neutrality.

Meanwhile, water electrolysis reactions include oxygen evolution reaction (OER) and hydrogen evolution reaction (HER), wherein the OER occurs at the oxygen evolution electrode and the HER occurs at the hydrogen evolution electrode. The OER and the HER are shown in Formula 1 below.

[Formula 1] Oxygen evolution reaction 2H₂O → 4H⁺ +O₂ +4e⁻Hydrogen evolution reaction 4H⁺ + 4e⁻ → 2H₂ Overall reaction: 2H₂O → 2H₂ +O₂

In particular, in the water electrolysis reaction, an overpotential higher than the theoretical OER voltage occurs due to a slower reaction rate of the OER than that of the HER. Thus, in order to improve the performance of a water electrolysis system, it is necessary to develop a high-efficiency catalyst lowering the overpotential of the OER which requires a high overpotential.

### SUMMARY OF THE INVENTION

Embodiments of the present disclosure may provide a catalyst electrode with improved OER performance and a method for manufacturing the catalyst electrode.

A catalyst electrode according to an embodiment of the present disclosure includes a metal layer; and a catalyst layer formed on the metal layer, wherein the catalyst layer includes iridium and palladium. In one embodiment, the catalyst electrode contains iridium and palladium in the catalyst layer at a loading amount of iridium ranging from 0.02 to 0.8 mg/cm², and at a loading amount of palladium ranging from 0.1 to 0.9 mg/cm².

In one embodiment, at least a part of the iridium and palladium included in the catalyst layer may be chemically bonded with each other.

In one embodiment, the metal layer may include one or more selected from the group consisting of a metal mesh, metal foam, metal foil, metal felt, and metal fiber.

In one embodiment, the metal layer may include one or more metals or metal alloy selected from the group consisting of titanium, nickel, and stainless steel.

In one embodiment, the iridium and palladium may be electrochemically deposited on the metal layer.

In one embodiment, the iridium and palladium may be in direct contact with the metal layer.

In one embodiment, the catalyst layer may not include a binder.

A method for manufacturing a catalyst electrode according to an embodiment of the present disclosure includes a step of depositing iridium and palladium on a metal substrate.

In one embodiment, the step of depositing iridium and palladium on a metal substrate may include a step of inputting the metal substrate to a solution including an iridium precursor and a palladium precursor; and a step of electrochemically depositing the iridium and palladium on the metal layer.

In one embodiment, at least a part of the iridium and palladium deposited on the metal substrate may be chemically bonded with each other.

In one embodiment, the step of electrochemically depositing the iridium and palladium on the metal layer may be performed by applying a voltage through one or more electrodes in contact with the solution.

In one embodiment, the voltage may be increased at a constant rate.

In one embodiment, the method for manufacturing a catalyst electrode may further include a step of heat-treating the metal substrate with deposited iridium and palladium.

In one embodiment, the method for manufacturing a catalyst electrode may further include a step of acid-treating the metal substrate before the step of depositing iridium and palladium on a metal substrate.

A membrane electrode assembly according to one embodiment of the present disclosure may include an electrolyte membrane; an anode positioned on one surface of the electrolyte membrane; and a cathode positioned on the other surface of the electrolyte membrane, wherein the anode may include: a metal layer; and a catalyst layer formed on the metal layer and including iridium and palladium.

The present disclosure further provides a use of the catalyst electrode for being included in a water electrolysis device or in a fuel cell.

According to the present disclosure, a catalyst electrode with improved OER performance and a method for manufacturing the catalyst electrode can be provided.

### BRIEF DESCRIPTION OF THE DRAWINGS

FIG. 1 shows a diagram for explaining a catalyst electrode according to one embodiment of the present disclosure.
FIG. 2 shows a flowchart for explaining a method for manufacturing a catalyst electrode according to one embodiment of the present disclosure.
FIG. 3 shows a diagram for explaining an example of an electrochemical system used in a method for manufacturing a catalyst electrode according to one embodiment of the present disclosure.
FIG. 4 shows scanning electron microscope (SEM) images of a catalyst electrode according to one embodiment of the present disclosure.
FIG. 5 shows energy dispersive spectrometer (EDS) mapping images of a catalyst electrode according to one embodiment of the present disclosure.
FIG. 6 is a graph showing the results of an X-ray diffraction (XRD) analysis of catalyst electrodes according to one embodiment of the present disclosure and comparative examples.
FIGS. 7 and 8 are graphs showing the results of an X-ray photoelectron spectroscopy (XPS) analysis of catalyst electrodes according to one embodiment of the present disclosure and comparative examples.
FIG. 9 is a graph showing the embedded amount of iridium metal as measured by performing an inductively coupled plasma atomic emission spectroscopy (ICP-AES) analysis with catalyst electrodes according to one embodiment of the present disclosure and comparative examples.
FIG. 10 is a graph showing OER performance of catalyst electrodes according to one embodiment of the present disclosure and comparative examples.

### DETAILED DESCRIPTION

The structural or functional descriptions of embodiments disclosed in the present specification or application are merely illustrated for the purpose of explaining embodiments according to the technical principle of the present invention, and embodiments according to the technical principle of the present invention may be implemented in various forms in addition to the embodiments disclosed in the specification of application. In addition, the technical principle of the present invention is not construed as being limited to the embodiments described in the present specification or application.

### Catalyst electrode

In one aspect of the present disclosure, provided is a catalyst electrode including a metal layer; and a catalyst layer formed on the metal layer, wherein the catalyst layer includes iridium and palladium.

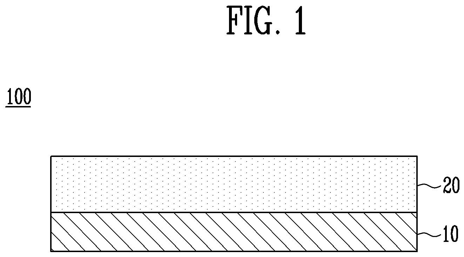

FIG. 1 shows a diagram for explaining a catalyst electrode according to one embodiment of the present disclosure. Hereinafter, a catalyst electrode according to an embodiment of the present disclosure will be described with reference to FIG. 1.

Referring to FIG. 1, a catalyst electrode 100 includes a metal layer 10 and a catalyst layer 20.

A metal layer 10 may function as a metal substrate on which a catalyst metal is deposited, and in one embodiment, the metal of the metal layer 10 may include one or more selected from the group consisting of a metal mesh, metal foam, metal foil, metal felt, and metal fiber which respectively is made of an appropriate metal or metal alloy. In addition, in one embodiment, the metal of the metal layer 10 may include one or more metals or metal alloy selected from the group consisting of titanium, nickel, and stainless steel. For example, the metal layer 10 may include a titanium mesh, but is not limited thereto.

A catalyst layer 20 is formed on a metal layer 10 and includes iridium and palladium. The catalyst layer 20 may include iridium and palladium in one layer, as further described later; or the catalyst layer 20 may include silver and iridium in separate layers, respectively. In an embodiment, iridium and palladium may be deposited on the metal layer 10 by an electrochemical method. In an embodiment, at least a part of iridium and palladium included in the catalyst layer 20 may be chemically bonded to each other. In other words, as at least a part of iridium and palladium included in the catalyst layer 20 is chemically bonded to each other, such that the electronic structure of at least a part of the iridium and palladium included in the catalyst layer 20 may be changed. As the electronic structure of at least a part of the iridium and palladium included in the catalyst layer 20 is changed, in particular, as the electronic structure of at least a part of the iridium included in the catalyst layer 20 is changed, the activity of the catalyst electrode 100 for oxygen evolution reaction (OER) may be improved, and as a result, the OER performance of the catalyst electrode 100 may be improved.

In an embodiment, iridium and palladium included in the catalyst layer 20 may be in direct contact with the metal layer 10. In other words, as described above, iridium and palladium may be directly deposited on the metal layer 10 through an electrochemical method, and a chemical bond may be formed between the metal layer 10 and a catalyst layer 20. Accordingly, electron transfer performance and durability of a catalyst electrode 100 may be improved.

In an embodiment, the catalyst layer 20 may not include a binder. As described above, iridium and palladium may be deposited directly on the metal layer 10 through an electrochemical method, and a chemical bond may be formed between the metal of the metal layer 10 and the catalyst layer 20, such that the catalyst layer 20 may be formed on the metal layer 10 without using a separate binder.

The commonly used Nafion binder is a PFAS(Per- and polyfluoroalkyl substances), which can cause environmental issues, and there is a ploblem of reduced activity and reduced durability due to degradation of the Nafion binder during the electrode reaction. Also, the catalyst layer 20 can be directly deposited on the current collector(metal layer 10) without the use of a binder, which increases the chemical bonding between the current collector(metal layer 10) and the catalyst layer 20, thereby improving electron-transferability and durability.

The catalyst electrode 100 according to an embodiment of the present disclosure may have an oxygen evolution performance equal to or even better than that of a conventional noble metal catalyst electrode, with only a small metal loading amount as compared to a conventionally used noble metal catalyst electrode.

A catalyst electrode 100 according to an embodiment of the present disclosure may be included in a water electrolysis device or may be included in a fuel cell, but the use of the catalyst electrode 100 is not limited thereto.

### Method for manufacturing catalyst electrode

In another aspect of the present disclosure, provided is a method for manufacturing a catalyst electrode, including a step of depositing iridium and palladium on a metal substrate.

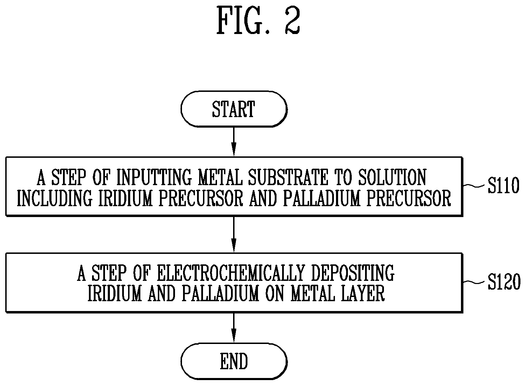

FIG. 2 shows a flowchart explaining a method for manufacturing a catalyst electrode according to one embodiment of the present disclosure. Hereinafter, a method for manufacturing a catalyst electrode according to an embodiment of the present disclosure will be described with reference to FIG. 2.

A method for manufacturing a catalyst electrode according to an embodiment of the present disclosure includes a step of depositing iridium and palladium on a metal substrate. The metal substrate may be a feature that is identical to the above-described metal layer, and accordingly, in an embodiment, the metal layer 10 may include one or more selected from the group consisting of a metal mesh, metal foam, metal foil, metal felt, and metal fiber, and in one embodiment, the metal layer may include one or more metal or metal alloy selected from the group consisting of titanium, nickel, and stainless steel.

Referring to FIG. 2, the step of depositing iridium and palladium on a metal substrate may include a step of inputting the metal substrate to a solution including an iridium precursor and a palladium precursor (step S110); and a step of electrochemically depositing the iridium and palladium on the metal layer (step S120).

In one embodiment, the iridium precursor may be an iridium salt. For example, the iridium salt may be one or more selected from the group consisting of iridium chloride, an iridium chloride hydrate, iridium bromide, iridium acetylacetonate, hexachloroiridic acid, sodium hexachloroiridate, and potassium hexachloroiridate, but is not limited thereto.

In one embodiment, the palladium precursor may be a palladium salt. For example, the palladium salt may be one or more selected from the group consisting of palladium nitrate, palladium chloride, palladium bromide, palladium sulfate, palladium acetylacetonate, palladium iodide, palladium acetate, palladium propionate, palladium dicyanide, palladium trifluoroacetate, ethylenediamine palladium chloride, and palladium hexafluoroacetylacetonate, but is not limited thereto.

In one embodiment, the solution including the iridium precursor and the palladium precursor may include an acidic solvent in consideration of dissolution of the iridium precursor and the palladium precursor. When the pH of the solution including the iridium precursor and the palladium precursor is relatively high, deposition efficiency may be reduced due to the formation of metal precipitates. The strongly acidic solvent may be, for example, a sulfuric acid solution, but is not limited thereto.

A step of electrochemically depositing the iridium and palladium on the metal layer (step S120) may be performed by applying voltage through one or more electrodes in contact with the solution including the iridium precursor and the palladium precursor.

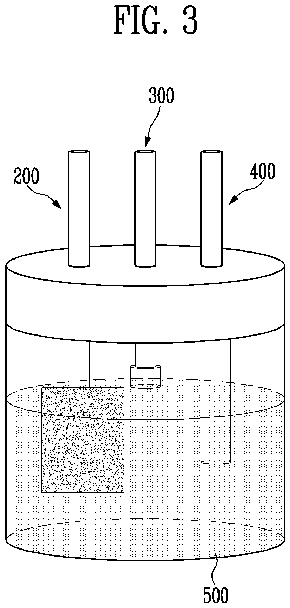

In one embodiment, the step of electrochemically depositing iridium and palladium on the metal layer may be performed using a two-electrode electrochemical system. For example, one or more electrodes in contact with the solution including the iridium precursor and the palladium precursor may include a working electrode and a reference electrode. In another embodiment, the step of electrochemically depositing iridium and palladium on the metal layer may be performed using a three-electrode electrochemical system. For example, one or more electrodes in contact with the solution including the iridium precursor and the palladium precursor may include a working electrode, a counter electrode, and a reference electrode. An examplary three-electrode electrochemical system is provided in through FIG. 3, and the electrochemical system in FIG. 3 includes a working electrode 200, a reference electrode 300, and a counter electrode 400, which are in contact with the solution 500 including the iridium precursor and the palladium precursor, which functions as an electrolyte.

In an embodiment, the working electrode may be an electrode where an electrochemical reaction occurs, the counter electrode may be an electrode that completes an electrical circuit so that charges may move in an electrochemical system, and the reference electrode may be an electrode serving as a reference for measuring the potential of the working electrode. In the two-electrode electrochemical system, the reference electrode may also serve as the counter electrode. That is, since an electrochemical reaction occurs at the working electrode, the working electrode may include a metal substrate on which iridium and palladium are deposited.

In an embodiment, the voltage may be applied to the working electrode and the reference electrode or to the working electrode, the reference electrode, and the counter electrode, and as voltage is applied, iridium and palladium from a solution including the iridium precursor and the palladium precursor may be deposited on the metal substrate included in the working electrode. In one embodiment, the magnitude of the applied voltage may gradually increase. In addition, in one embodiment, the magnitude of the applied voltage may increase at a constant rate. Upon applying the voltage, crystal nuclei of palladium and iridium metal ions may be nucleated on the metal substrate, and then, as the voltage of an increased magnitude is repeatedly applied, growth of the crystals occurs. Accordingly, iridium and palladium metals may be deposited uniformly and efficiently on the metal substrate.

In one embodiment, a step of acid-treating the metal substrate may be performed before the step of depositing iridium and palladium on the metal substrate. By the step of acid-treating, oxides or foreign substances formed on the metal substrate may be removed, and as a result, iridium and palladium ions may be effectively deposited on the metal substrate.

In addition, in one embodiment, the method may further include a step of heat-treating the metal substrate with deposited iridium and palladium, after the step of depositing iridium and palladium on the metal substrate. Accordingly, iridium and palladium deposited on the metal substrate may have a stable metal phase.

### Membrane electrode assembly

In another aspect of the present disclosure, provided is a membrane electrode assembly including an electrolyte membrane; an anode positioned on one surface of the electrolyte membrane; and a cathode positioned on the other surface of the electrolyte membrane, wherein the anode includes: a metal layer 10; and a catalyst layer 20 formed on the metal layer 10 and including iridium and palladium.

The membrane electrode assembly provided in such other aspect of the present disclosure may include the above-described catalyst electrode 100 as the anode. In other words, the anode may include the metal layer 10; and the catalyst layer 20 formed on the metal layer 10 and including iridium and palladium.

In addition, a membrane electrode assembly provided in such other aspect of the present disclosure may include a cathode including a cathode catalyst, and the cathode catalyst may be a material commonly used in the art. For example, as the cathode catalyst, one single substance or a mixture of two or more substances selected the group consisting of platinum, ruthenium, iridium, osmium, palladium, platinum-ruthenium alloys, platinum-osmium alloys, platinum-palladium alloys, and oxides thereof may be used, but is not limited thereto.

In addition, a membrane electrode assembly provided in another aspect of the present disclosure may include an electrolyte membrane disposed between the anode and the cathode. For example, the electrolyte membrane may be a polymer electrolyte membrane including a fluorine-based polymer or a hydrocarbon-based polymer, but is not limited thereto.

A membrane electrode assembly provided in another aspect of the present disclosure may be included in a water electrolysis device or a fuel cell.

### Examples

Hereinafter, a catalyst electrode, a method for manufacturing catalyst electrode and a membrane electrode assembly according to the present disclosure will be described in more detail based on examples and comparative examples. However, the following examples and comparative examples are only examples to describe the present disclosure in more detail, and the present disclosure is not limited by the following examples and comparative examples.

### <Example 1> - Manufacturing of Ir-Pd/Ti electrode

indium chloride and palladium nitrate were added to a 0.5 M sulfuric acid solution at a concentration of 200 µM and 400 µM), respectively, and ultrasonic treatment and stirring were performed until the added iridium chloride and palladium nitrate were completely dissolved.

To electrochemically deposit the prepared precursor solution on a working electrode, an electrochemical cell was used. The electrochemical cell consisted of the prepared precursor solution, a titanium mesh acid-treated with oxalic acid (5 wt. %) as the working electrode, a graphite rod as a counter electrode, and Ag/AgCI as a reference electrode.

The titanium mesh was immersed in the precursor solution with an area of 1 cm², and linear sweep voltammetry (LSV) was repeated 300 times at a scanning rate of 10 mV/s in a voltage range of 0.02 V to 0.17 V (vs reversible hydrogen electrode (RHE)) to deposit iridium and palladium on the titanium mesh, which was the working electrode. Finally, an iridium-palladium/titanium(lr-Pd/Ti) electrode was manufactured by performing heat treatment at 300 °C for one hour in H₂ atmosphere.

### <Comparative Example 1> - Preparation of Ir/Ti electrode

An electrode was manufactured in the same manner as in Example 1, except that the titanium mesh was immersed into an iridium precursor solution prepared without adding the palladium precursor. The iridium precursor solution included iridium chloride dissolved in a 0.5 M sulfuric acid solution at a concentration of 500 µM).

### <Comparative Example 2> - Preparation of Pd/Ti electrode

An electrode was manufactured in the same manner as in Example 1, except that the titanium mesh was immersed into a palladium precursor solution prepared without adding the iridium precursor. The palladium precursor solution included palladium nitrate dissolved in a 0.5 M sulfuric acid solution at a concentration of 500 µM).

### < Comparative Example 3> - Preparation of IrO₂ electrode

IrO₂ black (100% by weight, Alfa Aesar), a commercial anode catalyst, was used to prepare an IrO₂ electrode

### <Experimental Example 1> - Morphology analysis of electrode of Example 1

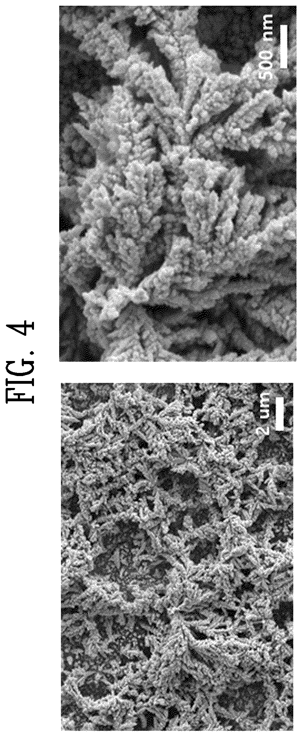

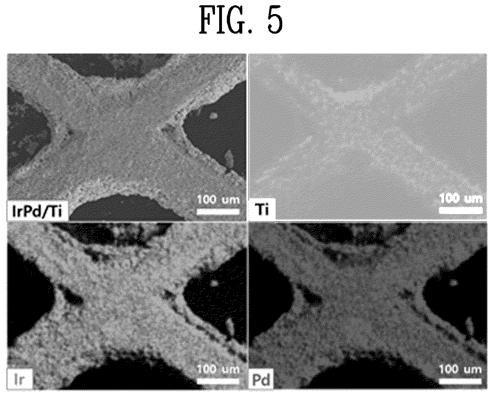

Using a scanning electron microscope (manufactured by Apreo) equipped with an energy-dispersive X-ray spectroscopy (EDS) detector, scanning electron microscopy (SEM) images and EDS mapping analysis results for the electrode of Example 1 were obtained. The SEM images of the electrode of Example 1 are shown in FIG. 4, and the EDS mapping analysis results are shown in FIG. 5.

Referring to FIG. 4, it can be confirmed that a dendrite nanostructure was formed on the titanium mesh of the electrode of Example 1.

In addition, referring to FIG. 5, it can be confirmed that both iridium and palladium were present on the titanium mesh of the electrode of Example 1, and both iridium and palladium were deposited uniformly throughout the titanium mesh.

### <Experimental Example 2> - Analysis of deposition characteristics of catalyst layer in electrodes

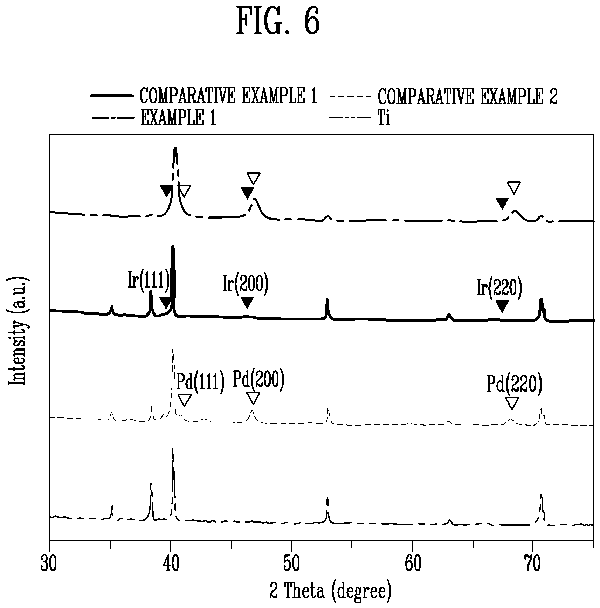

The metal crystal planes of the electrodes of Example 1, Comparative Example 1, and Comparative Example 2 were confirmed using X-ray diffraction (XRD) manufactured by PANalytical). The measurement was performed at 40 kV and 100 mA using Cu Kα radiation in a range of 10° to 80° at a scan speed of 6° per minute at intervals of 0.01°, and the results are shown in FIG. 6.

Referring to FIG. 6, an iridium peak was observed in the XRD analysis results of the electrode of Comparative Example 1, and a palladium peak was observed in the XRD analysis results of the electrode of Comparative Example 2. Since both an iridium peak and a palladium peak were observed in the electrode of Example 1, it can be confirmed that both iridium and palladium were present in the catalyst layer deposited on the titanium mesh of the electrode of Example 1.

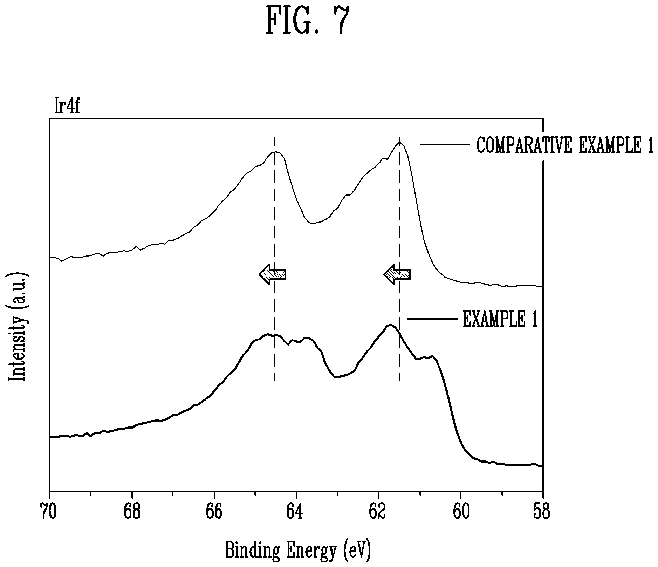

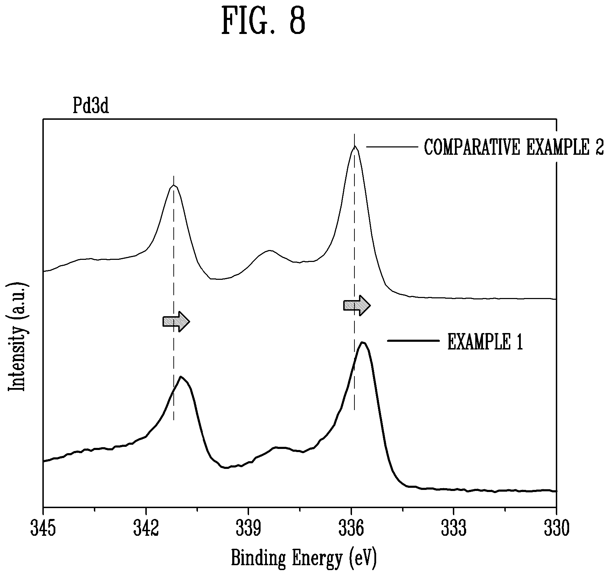

In addition, the electronic structure of the metal present on the electrode surface was confirmed through X-ray photoelectron spectroscopy (XPS) for the electrodes of Example 1, Comparative Example 1, and Comparative Example 2, and the results are shown in FIGS. 7 and 8.

Referring to FIG. 7, as a result of confirming the Ir4f peak of the electrode of Example 1 and the electrode of Comparative Example 1, since the peak of Example 1 shifted to the left compared to the peak of Comparative Example 1, it can be assumed that not only iridium but also palladium was present in the catalyst layer of the electrode of Example 1, and it can be seen that the electronic structure of iridium was changed due to the presence of palladium.

Referring to FIG. 8, as a result of confirming the Pd3d peak of the electrode of Example 1 and the electrode of Comparative Example 2, since the peak of Example 1 shifted to the right compared to the peak of Comparative Example 2, it can be assumed that not only palladium but also iridium was present in the catalyst layer of the electrode of Example 1, and it can be seen that the electronic structure of only was changed due to the presence of iridium.

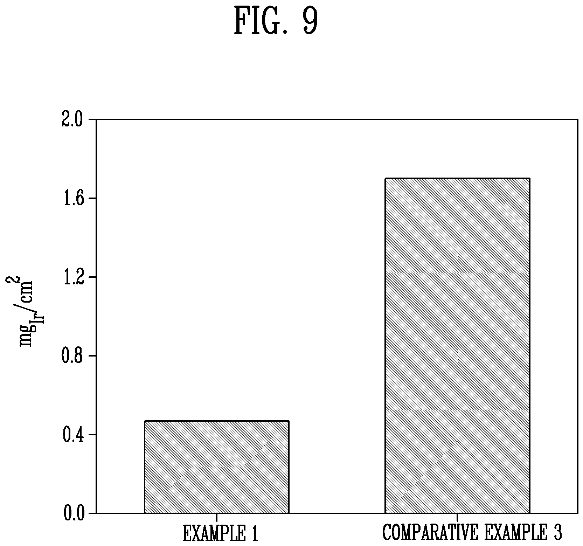

In addition, for the electrodes of Example 1 and Comparative Example 3, the content of iridium (% by weight) present in the catalyst layer of each of the manufactured electrodes was obtained using inductively coupled plasma atomic emission spectroscopy (ICP-AES, NexlON 300X), and the results are shown in FIG. 9.

Referring to FIG. 9, the content of iridium present in the catalyst layer of the electrode of Example 1 was at the level of 0.47 mg/cm², confirming that the loading amount of iridium, an active metal, was significantly less compared to the electrode of Comparative Example 3, which had an iridium content of 1.7 mg/cm². Despite the significantly low iridium loading amount, the electrode of Example 1 may have superior activity compared to the electrode of Comparative Example 3, as will be described in Experimental Example 3 below.

### <Experimental Example 3> - Evaluation of electrochemical properties of electrodes

The electrodes of Example 1, Comparative Example 1, Comparative Example 2, and Comparative Example 3 were used as a working electrode, Ag/AgCI (sat. 3 M KCI) was used as a reference electrode, and a graphite rod was used as a counter electrode to measure the polarization of the OER for the electrodes of Example 1, Comparative Example 1, Comparative Example 2, and Comparative Example 3. Each electrode was immersed into a 0.5 M H₂SO₄ acid solution, and OER was performed at a scan rate of 10 mV/s and room temperature.

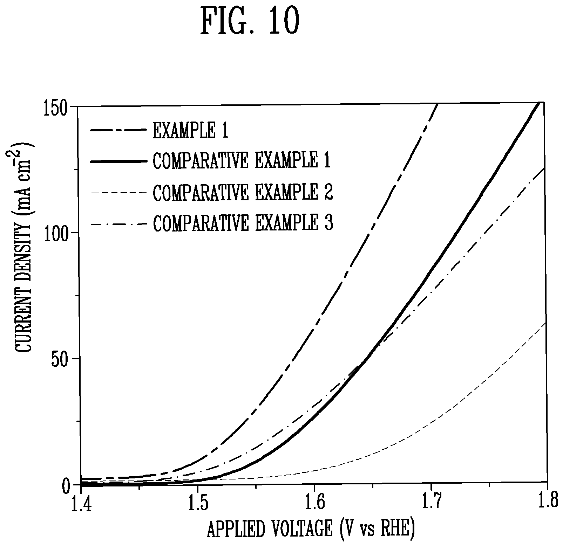

The polarization results for the OER are shown in FIG. 10 and Table 1 below, in which all the measurements were expressed as "vs reversible hydrogen electrode (RHE)."

**[Table 1]**

| | Overpotential (mV vs RHE; reference of current density: 10 mAcm⁻²) |
|---|---|
| Example 1 | 280 |
| Comparative Example 1 | 328 |
| Comparative Example 2 | 412 |
| Comparative Example 3 | 302 |

Referring to FIG. 10 and Table 1, it can be seen that with regard to the OER performance based on a current density of 10 mAcm⁻², the activity was good in the following order: Example 1, Comparative Example 3, Comparative Example 1, and Comparative Example 2.

In Example 1, an overpotential of only 280 mV was required to obtain a current density value of 10 mAcm⁻², which is a value 22 mV smaller than that of Comparative Example 3 and 48 mV smaller than that of Comparative Example 1.

As confirmed through the ICP analysis results of Example 1, it can be seen that although Example 1 had a significantly lower catalyst metal loading amount than that of Comparative Example 3, the OER performance of Example 1 was superior to Comparative Example 3.

In other words, it can be assumed that in the electrode of Example 1, as both iridium and palladium were deposited on a titanium mesh and interact with each other, the electronic structure of iridium, which was the active metal, was changed, and so the OER performance was significantly improved.

## Claims

1. A catalyst electrode (100) comprising:
a metal layer (10); and
a catalyst layer (20) formed on the metal layer (10),
wherein the catalyst layer (20) includes iridium and palladium.

2. The catalyst electrode (100) according to claim 1, wherein at least a part of the iridium and palladium included in the catalyst layer (20) is chemically bonded with each other.

3. The catalyst electrode (100) according to claim 1, wherein iridium contained in the catalyst layer (20) at a loading amount ranging from 0.02 to 0.8 mg/cm², and palladium contained in the catalyst layer (20) at a loading amount ranging from 0.1 to 0.9 mg/cm².

4. The catalyst electrode (100) according to claims 1 or 2, wherein the metal layer (10) includes one or more selected from the group consisting of a metal mesh, a metal foam, a metal foil, a metal felt, and a metal fiber, wherein the metal of the metal layer (10) includes one or more metals or metal alloy selected from the group consisting of titanium, nickel, and stainless steel.

5. The catalyst electrode (100) according to any one of claims 1 to 4, wherein the iridium and palladium are electrochemically deposited on the metal layer (10).

6. The catalyst electrode (100) according to any one of claims 1 to 5, wherein the iridium and palladium are in direct contact with the metal layer (10).

7. The catalyst electrode (100) according to any one of claims 1 to 6, wherein the catalyst layer (20) does not include a binder.

8. A method for manufacturing a catalyst electrode (100), comprising a step of depositing iridium and palladium on a metal substrate.

9. The method for manufacturing a catalyst electrode (100) according to claim 8, wherein the step of depositing iridium and palladium on a metal substrate includes:
a step of inputting the metal substrate to a solution (500) including an iridium precursor and a palladium precursor; and
a step of electrochemically depositing the iridium and palladium on the metal layer (10).

10. The method for manufacturing a catalyst electrode (100) according to claims 8 or 9, wherein at least a part of the iridium and palladium deposited on the metal substrate are chemically bonded with each other.

11. The method for manufacturing a catalyst electrode (100) according to any one of claims 8 to 10, wherein the step of electrochemically depositing the iridium and palladium on the metal layer (10) is performed by applying a voltage through one or more electrodes in contact with the solution (500);
optionally wherein the voltage is increased at a constant rate.

12. The method for manufacturing a catalyst electrode (100) according to any one of claims 8 to 11, further comprising: a step of heat-treating the metal substrate with the deposited iridium and palladium.

13. The method for manufacturing a catalyst electrode (100) according to any one of claims 8 to 12, further comprising a step of acid-treating the metal substrate before the step of depositing iridium and palladium on the metal substrate.

14. A membrane electrode assembly, comprising:
an electrolyte membrane;
an anode positioned on one surface of the electrolyte membrane; and
a cathode positioned on the other surface of the electrolyte membrane,
wherein the anode includes:
a metal layer (10); and
a catalyst layer (20) formed on the metal layer (10) and including iridium and palladium.

15. Use of the catalyst electrode (100) according to any one of claims 1 to 7 for being included in a water electrolysis device or in a fuel cell.
